# EUROPEAN PATENT APPLICATION

(11) **EP 4 620 551 A1**
(43) Date of publication of application: **24.09.2025**
(21) Application number: 23893781.7
(22) Date of filing: 20.11.2023
(51) Int. Cl.: B01D 29/03, B01D 29/56, B01D 29/96

(54) **FILTER DEVICE AND UNDERWATER CLEANING DEVICE**

(30) Priority: 21.11.2022 CN 202223080144 U; 03.11.2023 CN 202322974798 U
(71) Applicant: Wybotics Co., Ltd, Tianjin 300462 (CN)
(72) Inventor: CEN, Pu, Tianjin 300462 (CN); WANG, Yiliang, Tianjin 300462 (CN); WANG, Sihan, Tianjin 300462 (CN); WEI, Yuehan, Tianjin 300462 (CN)
(74) Representative: Winter, Brandl - Partnerschaft mbB
(86) International application number: PCT/CN2023/132622
(87) International publication number: WO 2024/109691

(57) **Abstract**

A filter device and an underwater cleaning device are provided. The filter device includes a filter body (15) and a filter accessory (5) arranged outside the filter body (15), where the filter body (15) and the filter accessory (5) are sequentially arranged in a water outflow direction of a water path, to sequentially filter polluted water. The filter accessory (5) partitions the interior of a housing (9) of the underwater cleaning device into at least two spaces; and the filter accessory (5) is arranged externally on at least one side of the filter body (15). The arrangement of the filter body (15) and the filter accessory (5) can enable secondary filtration of the polluted water. Therefore, the filter device is simple in structure and is easy to mount and dismount.

## Description

### TECHNICAL FIELD

The utility model relates to the field of swimming pool cleaning technology, and more particularly, to a filter device and an underwater cleaning device.

### BACKGROUND

During the cleaning of a swimming pool by a swimming pool cleaning machine, pollutants enter a filter device inside the swimming pool cleaning machine through a water inlet under the suction action of an impeller. Filtered water flows out through a water outlet, and solid pollutants in the pollutants are intercepted by the filter device and stay inside the filter device. After the swimming pool cleaning machine stops running, the filter device is taken out from the swimming pool cleaning machine, and the pollutants are dumped. The existing filter device is complex in structure and occupies a large internal space of the swimming pool cleaning machine, resulting in waste of the internal space of the swimming pool cleaning machine.

### SUMMARY

In view of the above problems, the utility model provides a filter device and an underwater cleaning device to solve the above or other former problems existing in the prior art.

To solve the above technical problems, the technical solutions adopted by the utility model are as below. A filter device includes a filter body and a filter accessory arranged outside the filter body, where the filter body and the filter accessory are sequentially arranged in a water outflow direction of a water path, to sequentially filter polluted water. The filter accessory partitions an interior of a housing of the underwater cleaning device into at least two spaces, and the filter accessory is arranged externally on at least one side of the filter body.

Further, the filter device also includes a bottom plate connected to the filter body, where the filter body is a structure having openings at two ends and a receiving cavity inside. The bottom plate is arranged at one end of the filter body, and a water inlet is provided in the bottom plate. Water flows along the water inlet, the receiving cavity, and the filter accessory in sequence, such that pollutants can enter the receiving cavity and are filtered by the filter body.

Further, the filter body includes a supporting element and a filter element arranged on the supporting element, where the supporting element is a frame structure provided with an opening, and the filter element is arranged on an inner side surface or the opening of the supporting element.

Further, the other end of the filter body contacts and fits with the housing.

Further, a sealing element is provided at a contact portion between the other end of the filter body and the housing.

Further, the other end of the filter body is provided with a handle.

Further, the other end of the filter body is provided with a top cover.

Further, each of the filter body and the top cover are provided with a plurality of openings, and a filter element is separately provided on the filter body and/or the top cover.

Further, the filter element is a filter mesh.

Further, the filter holes formed on the filter body are larger than the filter holes formed on the filter accessory.

Further, the filter accessory includes a mounting frame, a first filter element arranged in the mounting frame, and an abutment element. The abutment element is connected to the mounting frame and is arranged on a side surface of the mounting frame away from the filter body.

Further, the mounting frame includes a side plate and an annular peripheral side plate arranged on a side surface of the side plate, where a receiving space is constructed by the side plate and the peripheral side plate, and the first filter element is arranged in the receiving space.

Further, the filter accessory and the filter body are respectively connected to the housing by means of snap-fit, and the filter accessory is connected to the filter body by means of snap-fit.

Further, a first filter element is provided between the filter body and the filter accessory.

Further, the filter accessory is slidably connected to the housing of the underwater cleaning device to enhance sealing performance between the filter accessory and the housing.

Further, guide blocks are provided on a set of oppositely arranged side walls of the housing, guide grooves are provided on a set of oppositely arranged side walls of the filter accessory, and the guide blocks are inserted into the guide grooves such that the filter accessory can slide along the guide blocks.

Further, a first sealing element is provided at a contact portion between the filter accessory and a bottom plate of the housing of the underwater cleaning device.

Further, the first sealing element is a sealing strip.

Further, the first filter element is a sponge filter element.

Further, a thickness of the sponge filter element is greater than 1 mm.

Further, a pore size of the sponge filter element is 10 to 100 PPI (Pores Per Inch).

The underwater cleaning device includes a water inlet assembly and the filter device, where the water inlet assembly is arranged at the water inlet of the filter body.

According to the above technical solutions, the filter device has the filter body and the filter accessory. The filter accessory is arranged outside the filter body and can perform secondary filtration on polluted water, making the filter device simple in structure and easy to install and use.

The filter body is provided with the filter mesh, which can filter the polluted water. One end of the filter body is connected to the bottom plate, in which the water inlet is provided. The polluted water can enter the filter body through the water inlet, such that the filter body can filter the polluted water. The other end of the filter body is an open structure. After the installation of the filter device, the open end contacts and fits with an inner wall of the housing of the underwater cleaning device, such that the open end is sealed using the housing, making the filter device simple in structure and sufficiently using the installation space inside the underwater cleaning device, which is convenient for installation and disassembly.

The sealing element is provided at the contact portion between the open end and the inner wall of the housing, to seal the contact portion between the open end and the inner wall of the housing, such that the polluted water entering the filter body is filtered by the filter body and then flows out, and the polluted water does not flow out of the contact portion between the open end and the inner wall of the housing.

The filter accessory (such as a HEPA filter cartridge or a filter cotton) is provided to perform secondary filtration on the water filtered by the filter body, which further improves cleanliness of the filtered water while maintaining high cleanliness and low fluid resistance. The sponge filter element performs adsorption while filtering the polluted water, which further improves the cleanliness of the filtered water.

The filter accessory is provided with the abutment element, to provide a gap between the filter accessory and the inner wall of the underwater cleaning device or other components, which facilitates the outflow of the water subjected to the secondary filtration.

The filter body is provided with a filter frame and the top cover that are connected by means of snap-fit. Each of the filter frame and the top cover is provided with the filter mesh, which can filter the polluted water. One end of the filter frame is connected to a bottom side plate, and the bottom side plate is provided with the water inlet, through which the polluted water can enter the filter frame, such that the filter frame can filter the polluted water. The top cover is arranged at the other end of the filter frame to prevent solid pollutants from flowing out, such that the solid pollutants are intercepted in the filter body. The structure of the filter device is simple, and the installation space inside the underwater cleaning device is sufficiently used, making it convenient for installation and disassembly.

The sealing element is arranged at the contact portion between the filter accessory and the bottom plate of the housing to seal the contact portion between the filter accessory and the bottom plate of the housing, thereby preventing the polluted water from flowing out of the contact portion between the filter accessory and the bottom plate of the housing without being filtered by the filter accessory. The sealing element has an elastic element that undergoes elastic deformation during the installation of the filter accessory, to seal the installation position of the filter accessory.

### BRIEF DESCRIPTION OF THE DRAWINGS

FIG. 1 is a schematic structural diagram of a filter device from one viewing angle according to an embodiment of the utility model;
FIG. 2 is a schematic structural diagram of a filter device from another viewing angle according to an embodiment of the utility model;
FIG. 3 is a schematic structural diagram of another filter device according to an embodiment of the utility model;
FIG. 4 is a schematic structural diagram of another filter device provided with a filter accessory according to an embodiment of the utility model;
FIG. 5 is a schematic structural diagram of a filter accessory from one viewing angle according to an embodiment of the utility model;
FIG. 6 is a schematic structural diagram of a filter accessory from another viewing angle according to an embodiment of the utility model;
FIG. 7 is a schematic structural diagram of an upper cover provided with a sealing element according to an embodiment of the utility model;
FIG. 8 is a schematic structural diagram illustrating contact and fit between the upper cover provided with the sealing element and the filter device according to an embodiment of the utility model;
FIG. 9 is a partial structural schematic diagram (only showing a housing and the filter accessory) of an underwater cleaning device according to another embodiment of the utility model;
FIG. 10 is a schematic structural diagram of a filter body according to another embodiment of the utility model;
FIG. 11 is a schematic structural diagram (only showing the housing, the filter body, and the filter accessory) of the underwater cleaning device according to another embodiment of the utility model;
FIG. 12 is a schematic structural diagram of the underwater cleaning device from another viewing angle according to still another embodiment of the utility model;
FIG. 13 is a sectional structural schematic diagram of the underwater cleaning device according to still another embodiment of the utility model; and
FIG. 14 is another schematic structural diagram of the filter device of the underwater cleaning device according to an embodiment of the utility model.

Reference numerals in the figures:
bottom plate 1; supporting element 2; filter element 3;
water inlet assembly 4; filter accessory 5; mounting frame 50;
first filter element 51; abutment element 52; sealing element 6;
handle 7; upper cover 8; housing 9
top cover 10; guide block 11; guide groove 12
first sealing element 13; opening 14; filter body 15; and
supporting rib 16.

### DETAILED DESCRIPTION

Further description of the utility model is made in combination with the accompanying drawings and the specific embodiments.

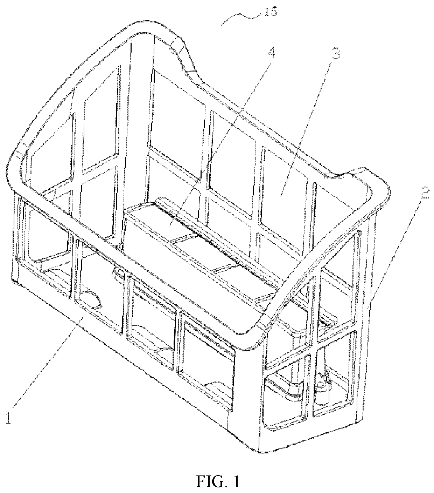

FIG. 1 shows a schematic structural diagram according to an embodiment of the utility model. This embodiment relates to a filter device and an underwater cleaning device. The filter device is installed inside the underwater cleaning device, which is used to clean a swimming pool. During the operation of the underwater cleaning device, polluted water enters the filter device, and the filtered water flows out through a water outlet of the swimming pool cleaning device, but solid pollutants are intercepted and stay inside the filter device. The filter device is simple in structure and is easy to install and disassemble.

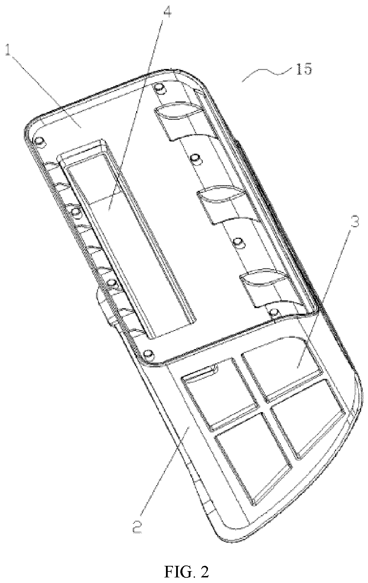

As shown in FIGS. 1 to 2, the filter device for filtering polluted water includes a filter body 15 and a filter accessory 5 arranged outside the filter body 15. The filter body 15 and the filter accessory 5 are sequentially arranged in a water outflow direction of a water path, to sequentially filter the polluted water. The filter accessory 5 partitions the interior of a housing 9 of the underwater cleaning device into at least two spaces. The filter accessory 5 is arranged externally on at least one side of the filter body 15. That is, the filter body 15 is positioned in any space on at least one side of the filter accessory 5.

Specifically, the filter device includes a bottom plate 1 connected to the filter body 15. The filter body 15 is a structure having openings at two ends and a receiving cavity inside. The bottom plate 1 is arranged at one end of the filter body 15, and a water inlet is provided in the bottom plate 1. The filter accessory 5 is arranged outside the filter body 15, to form a filter channel, such that water (along with the pollutants driven by the flow of the water) flows along the water inlet, the receiving cavity, and the filter accessory 5 in sequence, and the polluted water can enter the receiving cavity. The polluted water is filtered by the filter body 15 and the filter accessory 5, and the filtered water flows out, but the solid pollutants stay in the receiving cavity and the filter accessory 5, thereby achieving secondary classification filtration of the polluted water and collection of the solid pollutants.

The bottom plate 1 is fixedly connected to the filter body 15, and the bottom plate 1 and the filter body 15 form a box-shaped structure with one open end and the receiving cavity, thereby forming the overall structure of the filter device. Arrangement of the bottom plate 1 facilitates the installation of a water inlet assembly 4. The filter body 15 is used for filtering the polluted water. The fixed connection between the bottom plate 1 and the filter body 15 may be achieved by connecting pieces such as bolts or by means of integrated molding, or other fixed connection modes may be selected according to actual needs, and no specific requirements are made here. In this embodiment, preferably the bottom plate 1 is integrally formed with the filter body 15.

As a plate structure, the bottom plate 1 is provided with a water inlet, which is a through-hole structure, such that the internal cavity is interconnected with outside through the water inlet. When the filter device is installed inside the underwater cleaning device, the water inlet in the bottom plate 1 corresponds to and is interconnected with the water inlet at the bottom of the housing 9 of the underwater cleaning device, such that external polluted water can enter the filter device.

The shape of the water inlet is selected according to actual needs, and no specific requirements are made here.

As a ring-shaped structure with a certain length, the filter body 15 is fixedly installed on one side surface of the bottom plate 1. The cross-sectional shape of the filter body 15 may be a rectangle, a circle, a trapezoid, or another shape, which is selected according to the shape of the installation space of the filter device inside the underwater cleaning device, and no specific requirements are made here.

The filter body 15 includes a supporting element 2 and a filter element 3 arranged on the supporting element 2. The supporting element 2 is a frame structure provided with an opening 14, in which the filter element 3 is arranged. When the polluted water passes through the filter element 3, the solid pollutants are intercepted, thereby achieving filtration of the polluted water. A plurality of openings 14 are provided, and each side surface of the supporting element 2 is provided with the openings 14. On any side surface of the supporting element 2, the plurality of openings 14 may be arranged in multiple rows and multiple columns along a length direction and a width direction of this side surface, or may be arranged in a radial pattern or in another way, which is selected according to actual needs, and no specific requirements are made here.

The height of each side surface of the supporting element 2 may be same or different, which is selected according to actual needs, and no specific requirements are made here.

The supporting element 2 is preferably formed by means of integrated injection molding, and each side surface is pre-designed with the openings 14, to form a frame structure with the plurality of openings 14 on each side surface.

In this embodiment, preferably the cross-sectional shape of the supporting element 2 is rectangular, where a set of oppositely arranged side surfaces have different heights.

The filter element 3 is a filter mesh, which is fixedly installed on the inner side surface of the supporting element 2 for filtration. Alternatively, a plurality of filter elements 3 are provided, and the plurality of filter elements 3 are respectively installed at each opening 14 of the supporting element 2.

The other end of the filter body 15 is open and contacts and fits with the housing 9 of the underwater cleaning device. When the filter device is installed inside the underwater cleaning device, the open end of the filter body 15 is in contact with an inner wall of the housing 9. The inner wall of the housing 9 blocks the open end of the filter body 15, such that the polluted water entering the filter body 15 flows out after being filtered by the filter mesh on each side wall, but does not flow out from the open end of the filter body 15. In this way, it is ensured that the water flowing out of the filter body 15 is the filtered water. The filter body 15 contacts and fits with the housing 9, and there is no need to provide a cover structure, allowing the filter device to fully utilize the internal space of the underwater cleaning device. Therefore, the filter device is simple in structure and is easy to mount and dismount.

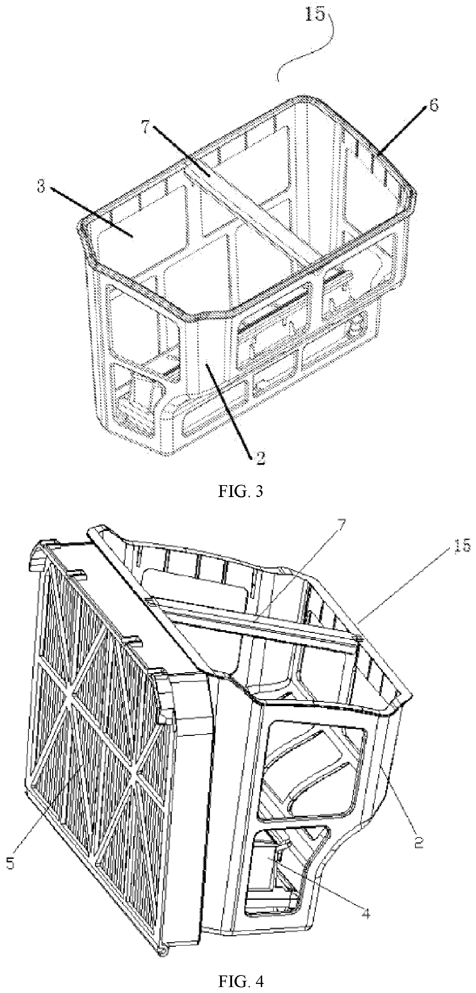

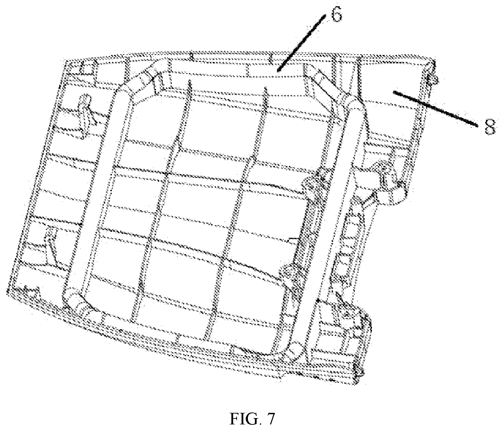

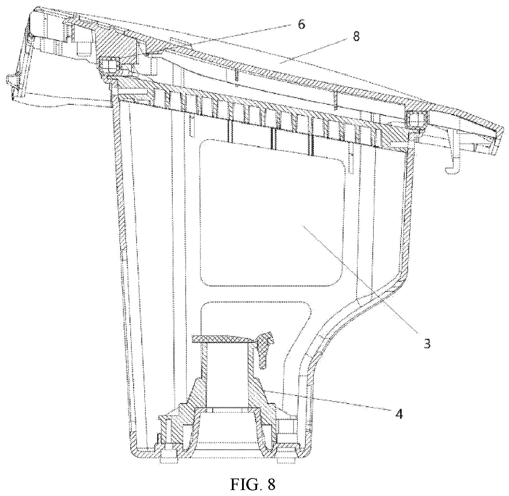

As a further optimized scheme, as shown in FIGS. 3 and 7 to 8, a sealing element 6 is provided at a contact portion between the other end of the filter body 15 and the housing 9 to seal the contact portion between this end of the filter body 15 and the inner wall of the housing 9, thereby preventing the polluted water from flowing out from the contact portion between this end of the filter body 15 and the inner wall of the housing 9. The sealing element 6 may be clamped on the inner wall of the housing 9 at a position corresponding to the open end of the filter body 15. A groove is provided on the inner wall of the housing 9, and the sealing element 6 is installed in the groove. The shape of the groove is adapted to the shape of the open end of the filter body 15, such that the open end of the filter body 15 can be inserted into the groove to squeeze the sealing element 6, thereby improving the sealing performance at the contact portion. Alternatively, the sealing element 6 may be installed (such as sleeved) at the open end of the filter body 15, such that the open end of the filter body 15 contacts the inner wall of the housing 9, to squeeze the sealing element 6, thereby improving the sealing performance at the contact portion. In this embodiment, the sealing element 6 is preferably installed on an upper cover 8 of the housing 9, and the sealing element 6 is preferably a rubber strip.

The other end of the filter body 15 is provided with a handle 7, which may be arranged along the length direction or width direction of this end of the filter body 15. The handle 7 may be fixedly or rotatably connected to this end of the filter body 15, or other connection modes are selectable according to actual needs, and no specific requirements are made here. Arrangement of the handle 7 makes it easier to take the filter device out of the underwater cleaning device for cleaning.

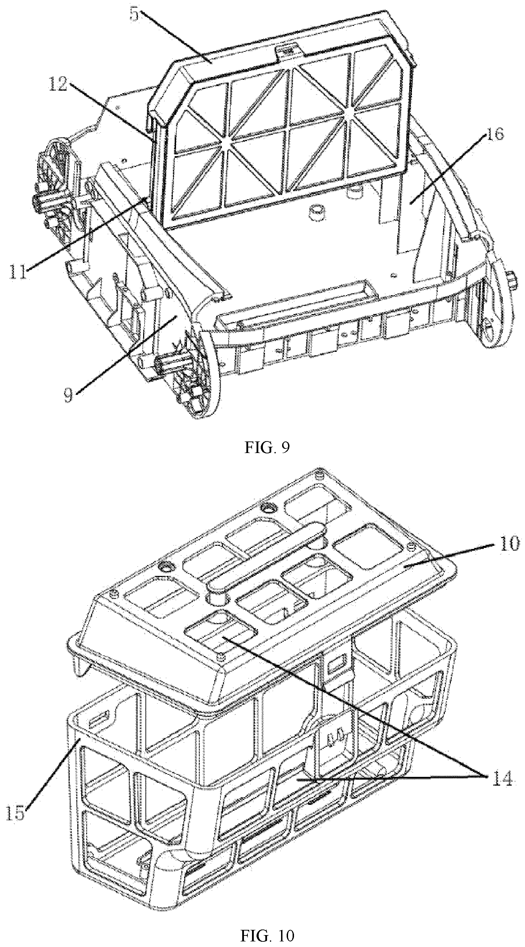

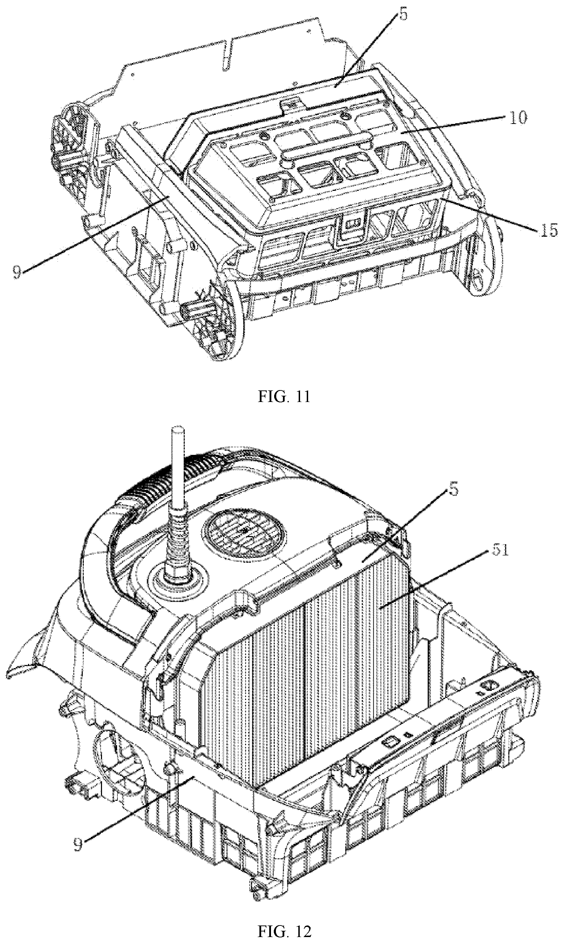

Alternatively, in some feasible embodiments, as shown in FIGS. 9 to 11, a top cover 10 is provided at the other end of the filter body 15, and is connected to the filter body 15 by means of snap-fit, thereby forming a box-shaped structure or a box structure to store the intercepted solid pollutants. Arrangement of the top cover 10 prevents the solid pollutants from flowing out or falling out of the filter frame. The top cover 10 is provided with a plug-in hole, and a corresponding position of the filter body 15 is provided with a protrusion. When the top cover 10 is connected to the filter body 15 by means of snap-fit, the protrusion is plugged into the plug-in hole to achieve the snap-fit connection between the filter body 15 and the top cover 10. Alternatively, the filter body 15 is provided with a plug-in hole, a corresponding position of the top cover 10 is provided with a protrusion. When the top cover 10 is connected to the filter body 15 by means of snap-fit, the protrusion is plugged into the plug-in hole to achieve the snap-fit connection between the filter body 15 and the top cover 10.

The top cover 10 is provided with a plurality of openings 14, and the top cover 10 is a cover structure provided with the plurality of openings 14. The plurality of openings 14 are arranged on one side surface of the top cover 10 facing the filter body 15. The plurality of openings 14 may be arranged in multiple rows and multiple columns along the length direction and the width direction of this side surface, or may be arranged in a radial pattern or in another way, which is selected according to actual needs, and no specific requirements are made here. A handle is provided on a side surface of the top cover 10 away from the filter body 15. By holding the handle, the filter device can be taken out of the housing 9, and it is easier to install the filter device inside the housing 9.

The filter body 15 and/or the top cover 10 are each provided with the filter element 3. That is, the filter element 3 may be arranged on the filter body 15, or the filter element 3 may be arranged on the top cover 10, or the filter element 3 may be arranged on each of the filter body 15 and the top cover 10. The filter element 3 may be selectively arranged according to actual needs as follows. Each inner side surface or opening 14 of the top cover 10 and the filter body 15 may be provided with a filter element 3. Each opening 14 of the filter body 15 and the top cover 10 may be provided with a filter element 3. In this case, a plurality of filter elements 3 are provided, and one filter element 14 is arranged at each opening 14. Alternatively, as an integral structure, the filter element 3 is fixedly installed on the inner wall of a peripheral side surface of the filter body 15 and the inner side surface of the top cover 10, respectively. The polluted water passes through the filter element 3, and the solid pollutants are intercepted, thereby achieving the filtration of the polluted water.

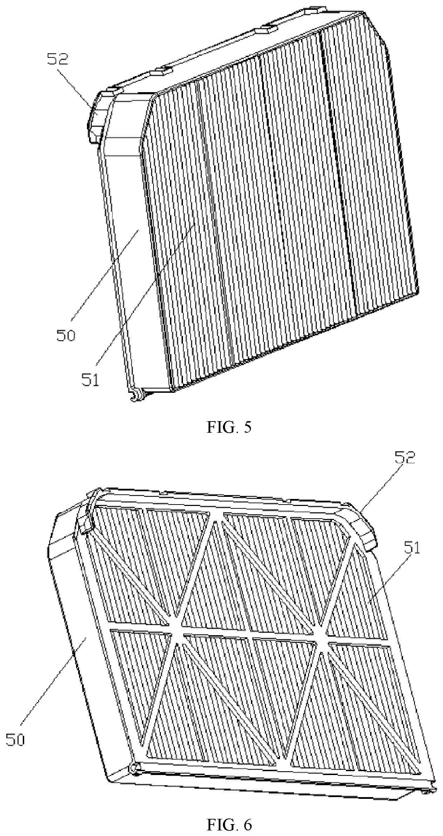

As a further optimized scheme, as shown in FIGS. 4 to 6, the filter device also includes the filter accessory 5 connected to the filter body 15. The filter accessory 5 is arranged outside the filter body 15 to further filter the filtered water and further purify the water filtered by the filter body 15.

The filter accessory 5 is arranged on any side surface of the filter body 15. The filter accessory 5 may be fixedly connected (such as through bolts or other connecting components), or detachably connected (such as plug-in or snap-fit connection, or contact fit) to the filter body 15, or other connection modes are selectable according to actual needs, and no specific requirements are made here.

A first filter element 51 is arranged on the filter accessory 5, or the first filter element 51 is arranged between the filter accessory 5 and the filter body 15, depending on the structure of the filter accessory 5 and the filter body 15. When the first filter element 15 is arranged on the filter accessory 5, the filter accessory 5 includes a mounting frame 50, a first filter element 51 arranged inside the mounting frame 50, and an abutment element 52. The abutment element 52 is connected to the mounting frame 50 and is arranged on a side surface of the mounting frame 50 away from the filter body 15. The mounting frame 50 serves as a skeleton to facilitate the installation of the first filter element 51. The abutment element 52 is arranged such that when the filter device is installed inside the underwater cleaning device, the abutment element 52 comes into contact with the inner wall of the housing 9 of the underwater cleaning device or other internal components, to provide a gap between the abutment element 52 and the inner wall of the housing 9 or other components, thereby making it easier for the filtered water to flow out.

The mounting frame 50 includes a side plate and an annular peripheral side plate arranged on a side surface of the side plate, where a receiving space is constructed between the side plate and the peripheral side plate, and the first filter element 51 is arranged in the receiving space. The side plate is a plate-shaped structure, and the peripheral side plate is fixedly arranged on one side surface of the side plate. The peripheral side plate is an annular structure with a certain length, and its cross-sectional shape is adapted to the shape of the side plate, such that a box-shaped structure is constructed to facilitate the installation of the first filter element 51. The length of the peripheral side plate is selected according to actual needs, and no specific requirements are made here. In this embodiment, preferably the side plate and the peripheral side plate are integrally formed.

The side plate is provided with a plurality of through holes that enable the filtered water to flow out. Shapes of the through holes may be triangles, circles, rectangles, or other shapes, which is selected according to actual needs, and no specific requirements are made here. The plurality of through holes may be arranged in multiple rows and multiple columns along the length direction and the width direction of the side plate, or may be arranged in a radial pattern or in another way, or may be formed by the connection of a plurality of supporting strips intersecting with each other, which is selected according to actual needs, and no specific requirements are made here.

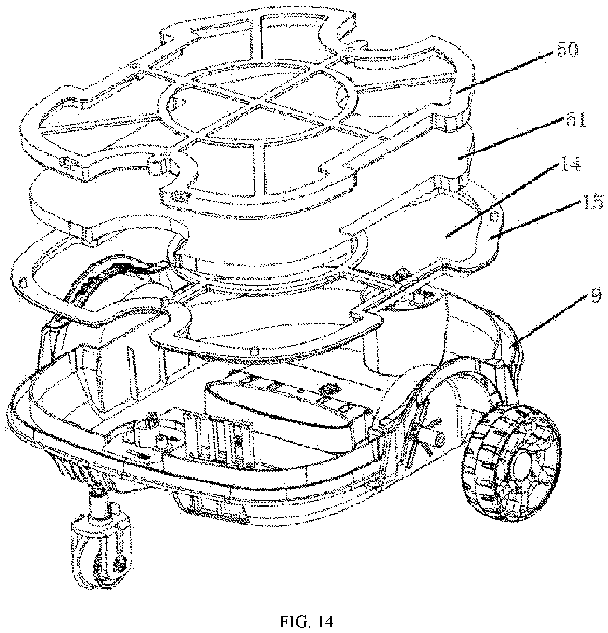

Alternatively, as shown in FIG. 14, when the first filter element 51 is arranged between the filter accessory 5 and the filter body 15, the mounting frame 50 of the filter accessory 5 is the plate-shaped structure. In this case, the filter body 15 is the plate-shaped structure and is provided with a plurality of openings 14. The shape of the filter body 15 is adapted to the internal shape of the housing 9. The shape of the mounting frame 50 is adapted to the internal shape of the housing 9, the plurality of openings 14 are provided in the mounting frame 50, which is connected to the filter body 15 by means of snap-fit. The first filter element 51 is positioned between the mounting frame 50 and the filter body 15, and the first filter element 51 is fixed between the mounting frame 50 and the filter body 15 by means of snap-fit connection. In this structure, both the filter body 15 and the filter accessory 5 are connected to the housing 9 by means of snap-fit. The first filter accessory 51 is arranged on the filter body 15, and partitions the interior of the housing of the underwater cleaning device into at least two spaces. In addition, the first filter accessory 51 may be previously embedded inside the mounting frame 50.

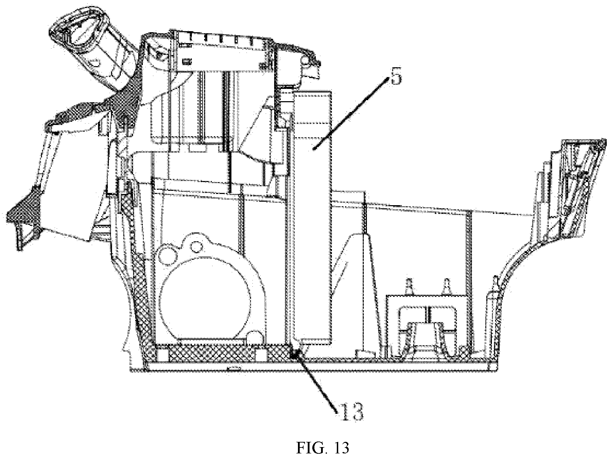

As shown in FIGS. 9 and 12 to 13, a sealing connection may be formed between the filter accessory 5 and the inner wall of the housing 9 to prevent small-sized solid pollutants such as mud and sand from leaking out of the gap between the filter accessory 5 and the housing 9. The sealing connection is implemented as below. The filter accessory 5 is slidably connected to the housing 9 of the underwater cleaning device, such that the filter accessory 5 can be accurately and quickly installed in the housing 9, thereby facilitating the quick installation and disassembly of the filter accessory 5, enhancing the sealing performance between the filter accessory 5 and the housing 9, and preventing solid impurities in the polluted water from leaking out of the gap between the filter accessory 5 and the inner wall of the housing 9. Specifically, guide blocks 11 are provided on a set of oppositely arranged side walls of the housing 9, guide grooves 12 are provided on a set of oppositely arranged side walls of the filter accessory 5, and the guide blocks 11 are inserted into the guide grooves 12 such that the filter accessory 5 can slide along the guide blocks 11. When the filter accessory 5 is installed, the guide blocks 11 are inserted into the guide grooves 12 to exert an acting force on the filter accessory 5, such that the filter accessory 5 is pressed into the housing 9, thereby achieving accurate positioning and quick installation of the filter accessory 5. Meanwhile, the guide blocks 11 can limit the movement of the filter accessory 5 along the length direction of the housing 9, thereby avoiding offset of the filter accessory 5. As groove structures, the guide grooves 12 are arranged on two side surfaces of the mounting frame of the filter accessory 5 facing the inner side walls of the housing 9, and are formed by the two side surfaces concave inward; and the guide grooves 12 are arranged along the length direction of the mounting frame. As protruding structures, the guide blocks 11 are installed on the inner side walls of the housing 9 facing the guide grooves 12, and protrudes from the inner side walls of the housing 9. The protrusions on the inner side walls of the housing 9 can block the gap between the filter accessory 5 and the inner walls of the housing 9, enhance the sealing performance between the filter accessory 5 and the housing 9, and prevent the solid impurities in the polluted water from leaking out of the gap between the filter accessory 5 and the inner wall of the housing 9.

A first sealing element 13 is provided at the contact portion between the filter accessory 5 and the bottom plate of the housing 9 of the underwater cleaning device to seal the contact portion between the filter accessory 5 and the bottom plate of the housing 9, thereby preventing the polluted water from flowing out of the contact portion between the filter accessory 5 and the bottom plate of the housing 9 without being filtered by the filter accessory 5. Furthermore, the first sealing element 13 has elasticity. During the installation of the filter accessory, the first sealing element 13 is compressed, and thus the first sealing element 13 can undergo elastic deformation to seal the contact position between the filter accessory 5 and the bottom plate of the housing 9. When the filter accessory 5 is taken out, the first sealing element 13 exerts an elastic force on the filter accessory 5 under the action of the elastic deformation, such that the filter accessory 5 is detached from the bottom plate of the housing 9, making it easier to disassemble the filter accessory 5.

The filter accessory 5 may be connected to the bottom plate of the housing 9 by means of plug-in connection. A groove is provided on the bottom plate of the housing 9, and the filter accessory 5 is inserted into the groove. The first sealing element 13 is installed in the groove, or the first sealing element 13 is installed at one end of the filter accessory 5 facing the bottom plate of the housing 9. After the filter accessory 5 is installed, the first sealing element 13 comes into contact with the bottom plate and seals the contact portion between the filter accessory 5 and the bottom plate of the housing 9, or other installation manners may be selected according to actual needs, and no specific requirements are made here.

In this embodiment, preferably the first sealing element 13 is a sealing strip.

The first filter element 51 may be an HEPA (high efficiency particulate air) filter or filter cotton. When the first filter element 51 is the filter cotton, the filter cotton can play an adsorption role, adsorbing while filtering. On this basis, even very small garbage can be filtered out, the filter cotton fills the whole receiving space to perform filtering. As a commercially available product, the HEPA filter or filter cotton may be selected according to actual needs, and no specific requirements are made here. In some feasible embodiments, preferably the filter cotton is a sponge filter element. The number of pores of the sponge filter element ranges from 30 PPI (Pores Per Inch) to 60 PPI. The thickness of the sponge filter element is greater than 1 mm, and preferably the thickness of the sponge filter element ranges from 1 mm to 20 mm.

Especially, the filter holes formed on the filter body 15 are larger than those formed on the filter accessory 5. The water passes through the filter body 15 and the filter accessory 5 successively, thus completing the step-by-step filtration. Compared to only providing a filter element having a larger pore size, smaller pollutants may be intercepted, and thus the water cleaning effect is improved. Compared to only providing the filter accessory 5 having a smaller pore size, larger pollutants may be intercepted within regions surrounded by the filter body 15, and only smaller pollutants may be adsorbed by the filter accessory 5, which avoids frequent cleaning and replacement of the first filter element 51 because of rapid adsorption of the pollutants by the filter accessory 5. Meanwhile, the continuous water flow is blocked by the filter body 15 and the filter accessory 5 successively, causing the water pressure to decrease twice, and the decrease in the water pressure is smaller. That is, the pressure difference between two sides (a water inlet side and a water outlet side) of the filter body 15 is decreased, and also the pressure difference between two sides (a water inlet side and a water outlet side) of the filter accessory 5 is decreased, avoiding partial or even complete blockage of the filter holes caused by large-sized intercepted foreign objects sticking closely to the filter holes when the pressure difference between the two places is too large. Furthermore, it is avoidable that small-sized foreign objects blocked by the supporting element 2 flow out of the filter holes due to the larger pressure difference, thus avoiding a decrease in the filtering effects of the filter body 15 and the filter accessory 5.

The abutment element 52 may be arranged at any end of the side plate, and in this case, the abutment element 52 is a plate structure with a certain width. Alternatively, the abutment element 52 is arranged along a circumferential direction of the side plate, and in this case, the abutment element 52 is an annular structure with a certain length. That is, the structure of the abutment element 52 may be selected according to actual needs.

The connection between the abutment element 52 and the side plate may be a fixed connection such as a connection through bolts or other connecting pieces, or may be a detachable connection such as a plug-in connection or integrated molding, or other connection modes are selectable according to actual needs, and no specific requirements are made here.

Finally, the filter holes of the filter body 15 may be formed on the filter element, and the filter holes of the filter accessory 5 may be formed on the first filter element 51. In this way, limited space is fully utilized, providing a reasonable layout, ensuring a larger filtering cross-sectional area (the sum of the cross-sectional areas of all the filter holes), and thus having greater filtering capacity (able to filter more water per unit time).

A plurality of Supporting ribs 16 are provided on the inner wall of the housing 9, and are plate-shaped structures arranged along a height direction or the length direction of the housing 9. When the filter body 15 is installed, the filter body 15 is inserted into the housing 9 and contacts the supporting ribs 16, which provide fixed support to the filter body 15. Furthermore, the gap between the filter body 15 and the side wall of the housing 9 is increased, which facilitates the outflow of the filtered water and strengthens the strength of the housing 9. In this embodiment, the supporting ribs 16 are provided on a set of oppositely arranged inner side surfaces of the housing 9.

An underwater cleaning device includes a water inlet assembly 4 and the filter device as described above, where the water inlet assembly 4 is arranged at the water inlet of the filter body 15. Specifically, the water inlet assembly 4 is arranged at the water inlet of the bottom plate 1, and the water inlet assembly 4 is arranged on a side surface of the bottom plate 1 facing the filter body 15. The water inlet assembly 4 guides the polluted water entering the filter device. Furthermore, the water inlet assembly 4 has a valve device, which can cover the water inlet after the underwater cleaning device stops working, thereby avoiding the outflow of the pollutants in the filter device and thus avoiding secondary pollution to the pool water.

When the underwater cleaning device is in operation, the water inlet assembly 4 is installed at the water inlet of the filter device, and the water inlet assembly 4 is positioned inside the filter device. The filter device provided with the water inlet assembly 4 is installed inside the underwater cleaning device. The water inlet at the bottom plate 1 is aligned with the water inlet at the bottom of the housing 9 of the underwater cleaning device, such that the polluted water can enter the filter device. The open end of the filter body 15 contacts and fits with the inner wall of the upper portion of the housing 9 of the underwater cleaning device, and the inner wall of the housing 9 seals the open end of the filter body 15.

The underwater cleaning device is placed underwater to perform cleaning operations. A cleaning roller brushes a pool bottom and pool walls, and the polluted water enters the filter device through the valve device of the water inlet assembly 4 after the valve device is opened by the polluted water under the suction action of an impeller. After being filtered by the filter element 3 of the filter body 15, the filtered water flows out through the water outlet of the underwater cleaning device. Alternatively, after being filtered by the filter element 3 of the filter body 15 and filtered again by the filter accessory 5, the filtered water flows out through the water outlet of the underwater cleaning device, and the solid pollutants are intercepted in the filter device.

After the underwater cleaning device stops working, the valve device is restored to its original position, so the water inlet is covered and sealed. The filter device is taken out and cleaned for reuse.

According to the above technical solutions, the filter device has the filter body 15 provided with a filter mesh, which can filter the polluted water. One end of the filter body 15 is connected to the bottom plate 1 in which the water inlet is provided. The polluted water can enter the filter body 15 through the water inlet, such that the filter body 15 can filter the polluted water. The other end of the filter body 15 is an open structure. After the installation of the filter device, the open end contacts and fits with the inner wall of the housing 9 of the underwater cleaning device, such that the open end is sealed using the housing 9, making the filter device simple in structure and sufficiently using the installation space inside the underwater cleaning device, which is convenient for installation and disassembly. The filter accessory 5 having filter cotton is provided to perform secondary filtration on the water filtered by the filter body 15, which further improves cleanliness of the filtered water. The sponge filter element performs absorption while filtering the polluted water, which further improves the cleanliness of the filtered water. The filter accessory 5 is provided with the abutment element, to provide a gap between the filter accessory 5 and the inner wall of the underwater cleaning device or other components, which facilitates the outflow of the water subjected to the secondary filtration. The filter body 15 is provided with the filter frame and the top cover 10 that are connected by means of snap-fit. Each of the filter frame and the top cover 10 are provided with the filter mesh, which can filter the polluted water. One end of the filter frame is connected to a bottom side plate provided with the water inlet, through which the polluted water can enter the filter frame, such that the filter frame can filter the polluted water. The top cover 10 is arranged at the other end of the filter frame to prevent the solid pollutants from flowing out, such that the solid pollutants are intercepted in the filter body 15. The structure of the filter device 15 is simple, and the installation space inside the underwater cleaning device is sufficiently used, making it convenient for installation and disassembly. The sealing element 6 is arranged at the contact portion between the filter accessory 5 and the bottom plate 1 of the housing 9 to seal the contact portion between the filter accessory 5 and the bottom plate 1 of the housing 9, thereby preventing the polluted water from flowing out of the contact portion between the filter accessory 5 and the bottom plate 1 of the housing 9 without being filtered by the filter accessory 5. The sealing element 6 has an elastic element that undergoes elastic deformation during the installation of the filter accessory 5, to seal the installation position of the filter accessory 5.

Embodiments of the utility model are described above in detail, but the contents are only the preferred embodiment of the utility model and cannot be considered as limiting the scope of implementation of the utility model. Any equivalent changes and improvements made within the scope of the utility model shall still fall within the scope of the patent for the utility model.

## Claims

1. A filter device comprising a filter body and a filter accessory arranged outside the filter body, wherein the filter body and the filter accessory are sequentially arranged in a water outflow direction of a water path, to sequentially filter polluted water; the filter accessory partitions an interior of a housing of an underwater cleaning device into at least two spaces; and the filter accessory is arranged externally on at least one side of the filter body.

2. The filter device according to claim 1, further comprising a bottom plate connected to the filter body, wherein the filter body is a structure having openings at two ends and a receiving cavity inside, the bottom plate is arranged at one end of the filter body, a water inlet is provided in the bottom plate; and water flows along the water inlet, the receiving cavity, and the filter accessory in sequence, such that pollutants can enter the receiving cavity and are filtered by the filter body.

3. The filter device according to claim 2, wherein the filter body comprises a supporting element and a filter element arranged on the supporting element, the supporting element being a frame structure provided with an opening, and the filter element being arranged at an inner side surface or the opening of the supporting element.

4. The filter device according to claim 2, wherein one other end of the filter body contacts and fits with the housing.

5. The filter device according to claim 4, wherein a sealing element is provided at a contact portion between the other end of the filter body and the housing.

6. The filter device according to claim 5, wherein the other end of the filter body is provided with a handle.

7. The filter device according to claim 2, wherein a top cover is provided at the other end of the filter body.

8. The filter device according to claim 7, wherein each of the filter body and the top cover is provided with a plurality of openings, and a filter element is separately provided on the filter body and/or the top cover.

9. The filter device according to claim 3 or 8, wherein the filter element is a filter mesh.

10. The filter device according to any one of claims 1 to 8, wherein filter holes formed in the filter body are larger than filter holes formed in the filter accessory.

11. The filter device according to any one of claims 1 to 8, wherein the filter accessory comprises a mounting frame, a first filter element arranged in the mounting frame, and an abutment element, wherein the abutment element is connected to the mounting frame and arranged on a side surface of the mounting frame away from the filter body.

12. The filter device according to claim 11, wherein the mounting frame comprises a side plate and an annular peripheral side plate arranged on a side surface of the side plate, a receiving space is constructed between the side plate and the peripheral side plate, and the first filter element is arranged in the receiving space.

13. The filter device according to any one of claims 1 to 8, wherein the filter accessory and the filter body are respectively connected to the housing by means of snap-fit, and the filter accessory is connected to the filter body by means of snap-fit.

14. The filter device according to claim 13, wherein a first filter element is provided between the filter body and the filter accessory.

15. The filter device according to any one of claims 1 to 8 and 12, wherein the filter accessory is slidably connected to the housing of the underwater cleaning device to enhance sealing performance between the filter accessory and the housing.

16. The filter device according to claim 15, wherein guide blocks are provided on a set of oppositely arranged side walls of the housing, guide grooves are provided on a set of oppositely arranged side walls of the filter accessory, and the guide blocks are inserted into the guide grooves such that the filter accessory can slide along the guide blocks.

17. The filter device according to claims 1 to 8, 12, 14, and 15, wherein a first sealing element is provided at a contact portion between the filter accessory and a bottom plate of the housing of the underwater cleaning device.

18. The filter device according to claim 17, wherein the first sealing element is a sealing strip.

19. The underwater cleaning device according to claim 12 or 14, wherein the first filter element is a sponge filter element.

20. The underwater cleaning device according to claim 19, wherein a thickness of the sponge filter element is greater than 1 mm.

21. The underwater cleaning device according to claim 20, wherein a pore size of the sponge filter element is 10 to 100 PPI.

22. An underwater cleaning device comprising a water inlet assembly and the filter device as claimed in any one of claims 1 to 21, wherein the water inlet assembly is arranged at a water inlet of the filter body.
